# EUROPEAN PATENT APPLICATION

(11) **EP 1 323 347 A1**
(43) Date of publication of application: **02.07.2003**
(21) Application number: 01205185.0
(22) Date of filing: 30.12.2001
(51) Int. Cl.: A21D 13/08, A21B 5/02, A21C 11/16

(54) **Cone**

(71) Applicant: SOCIETE DES PRODUITS NESTLE S.A., 1800 Vevey (CH)
(72) Inventor: Neidlinger, Sylke, 1010 Lausanne (CH); Geromini, Osvaldo, 1350 Orbe (CH); Heck, Ernst, 1302 Vufflens-La-Ville (CH)
(74) Representative: Wavre, Claude-Alain

(57) **Abstract**

A method of making the composition, the texture and the physical aspect of a cereal cone especially attractive by producing at least one strip of expanded cereal by extrusion-cooking, sheeting the strip between rolls, cutting the sheet into blanks and forming the blanks into a cone shape.

## Description

The present invention relates to a cereal cone and to a process for manufacturing it.

Traditionally, products such as pastry cups, ice cream cones or the like are made by baking a batter into a wafer or waffle blank or strip and forming the blank or strip into a cone shape.

Typically, US4761293 (Herting) discloses a method and an apparatus for making baked cones or cornets of baked wafer elements, especially coiled cones adapted to receive ice-cream or other comestible products.

US3958912 (Griner et al.) discloses a method for directly making pastry cups, ice cream cones or the like by baking a batter in split molds carried by mold bars, the molds cooperating with removable cores carried by core bars selectively latched to the mold bars.

A first object of the present invention is to provide a cereal cone having a texture which notably and advantageously differs from the texture of traditional wafer or waffle cones.

A second object of the present invention is to provide a process for manufacturing a cereal cone having a texture which notably and advantageously differs from the texture of traditional wafer or waffle cones.

To this end, the present cereal cone has a porous texture and it comprises, in % by weight, from 60 to 85% of cereal flour, from 2 to 10% of starch, from 8 to 20% of sugar, from 5 to 12% of milk powder, from 2 to 10% of oil or fat and from 1 to 5% of residual water.

The present process for manufacturing a cereal cone consists of producing at least one strip of expanded cereal by extrusion-cooking, sheeting the strip between rolls, cutting the sheet into blanks and forming the blanks into a cone shape.

It has surprisingly been found that it is possible in this way to provide cones having a texture which notably and advantageously differs from the texture of traditional wafer or waffle cones. As a matter of fact it is possible in this way to provide cones having a porous, crispy texture which stay crisp, or even a cracking texture recalling a biscuit texture.

Moreover it has surprisingly been found that it is possible in this way to provide cones made of a larger range of ingredients than traditional wafer or waffle cones, it is possible in this way to provide cones having not only different textures but also different aspects, and it is possible in this way even to provide multicoloured cones.

Thus, more flexibility has been found in the choice of texture, in the choice of ingredients, and in the choice of surface definition (especially as physical aspect, relief and colour is concerned).

The present invention therefore also involves a method of making the composition, the texture and the physical aspect of a cereal cone especially attractive by producing at least one strip of expanded cereal by extrusion-cooking, sheeting the strip between rolls, cutting the sheet into blanks and forming the blanks into a cone shape.

The present cereal cone thus comprises, in % by weight, from 60 to 85% of cereal flour, from 2 to 10% of starch, from 8 to 20% of sugar, from 5 to 12% of milk powder, from 2 to 10% of oil or fat and from 1 to 5% of residual water.

The present cereal cone may further comprise up to 2% of honey, up to 2% of glycose syrup, flavouring and/or colouring agents, for example.

The cereal flour may be wheat, barley, rice and/or corn, for example.

The starch may be a native starch from wheat, barley, rice, tapioca, potato and/or corn, especially waxy corn, for example.

The sugar may be sucrose, dextrose and/or fructose, for example.

The milk powder may be a powdered whole milk, a powdered skimmed milk or a powdered partly skimmed milk, for example.

The fat may be milk fat and/or vegetable fat such as butter oil and/or vegetable oil or fat which may act as lubricating agent in the extrusion-cooking process, for example.

The present cereal cone may be eaten or used as such, or after having been coated (especially after having been internally coated with a chocolate coating), a preferred use being a use as ice cream cone, for example.

The present process for manufacturing a cereal cone thus consists of producing at least one strip of expanded cereal by extrusion-cooking, sheeting the strip between rolls, cutting the sheet into blanks and forming the blanks into a cone shape.

Producing at least one strip of expanded cereal by extrusion-cooking may be carried out by firstly preparing a mixture comprising, in parts by weight, from 60 to 85 parts of cereal flour, from 2 to 10 parts of starch, from 8 to 20 parts of sugar, from 5 to 12 parts of milk powder, from 2 to 10 parts of oil or fat, and added water up to a water content of from 11 to 19% by weight of the mixture, such a water content being adequate for obtaining a correct expansion after extrusion of the cooked mixture.

The mixture may further comprise up to 2 parts of honey, up to 2 parts of glycose syrup, flavouring and/or colouring agents, for example.

The mixture may be prepared by first mixing together powdery components to obtain a dry mix and then mixing together the dry mix and liquid or fluid components.

This mixing step may be carried out in a first mixing section of a traditional food extruder, especially a twin screw extruder, for example.

Cooking the mixture may then be carried out at 110 to 180°C under 10 to 14 MPa for 5 to 50 s in subsequent sections of the extruder where the mixture is heated, compressed and sheared so that it forms a cooked thermo plastic mass.

The thermo plastic mass may be extruded by having it pushed by the extruder screw or twin screw through the openings of a die provided for at an end of the extruder.

The die may have one or more slot shaped extrusion openings having a length about 10 to 50 times its width, and a width of from about 0.5 to 2.5 mm, for example. In front of the extrusion slot the die may have an expansion control slot of larger cross-section than the cross-section of the extrusion slot (especially of a larger width of from about 1 to 8 mm), for expanding the strip of thermoplastic mass to its final form. An adequate die of this kind is disclosed in US4772197, for example

The thermo plastic mass may thus be expanded by extruding it through the die into an open space at ambiant temperature and at atmospheric pressure, for example.

Water is lost in form of steam escaping the thermoplastic mass during expansion so that the strip thus obtained has a porous texture and may have a water content of from 4 to 8%, for example.

The step of sheeting the extrusion-cooked and expanded strip may be carried out, while the strip is still hot (namely still in a thermoplastic state), between rolls the surface of which have a relief corresponding to a relief which one wants to impart to or to press into the surface of the strip. Such a relief may comprise a repeating motif in form of lines or of a network of lines which intersect, for example.

The step of cutting may be carried out by a cutting machine capable of continuously cutting the sheet into blanks having the shape of triangles (or trapezium) which follow each other side by side along the strip (the base of a triangle being adjacent the apex of the following triangle) so that only little waste has to be recycled, for example.

The blanks, still in a thermo plastic state, may then be formed into cones either by coiling or by pressing in a mould, for example.

The cones may finally be dried to a residual water content of from 1 to 5%, preferably from 1 to 3%, on a belt drier with hot air, for example.

The finished cones may have a weight of from 1 to 20 g and a height of from 2 to 15 cm, for example.

The cereal cone thus obtained, possibly coated (especially chocolate coated internally), may be conditioned in a packing providing for its protection against humidity, such as a packing made of a film with aluminium foil, for example.

The following example is given as illustration of an embodiment of the cereal cone and an embodiment of the process for manufacturing it according to the present invention. The parts and percentages are by weight.

### Example 1

For manufacturing a cereal cone, a mixture was prepared which had the following composition, (in parts, except added water):

| | |
|---|---|
| wheat flour | 78 |
| starch | 4 |
| sugar | 10 |
| milk powder (26% fat) | 8 |
| oil | 7 |
| honey | 1 |
| glucose syrup | 1 |
| vanillin | 0.05 |
| added water, up to a water | |
| content of | 12% |

For preparing the mixture, the powders were first mixed together to obtain a dry mix. The dry mix, oil and added water were then mixed together in the extruder. The mixture obtained in this way was extrusion-cooked with the aid of a BC-72 type CLEXTRAL twin screw extruder having a screw diameter of 88 mm and a total processing length of 900 mm.

Extrusion-cooking was carried out at 135°C under 14 MPa for 30 s, the two intermeshing screws rotating at 190 rpm (preferrred range 150 to 300 rpm). The cooked thermoplastic mass obtained in this way was extruded through a die having one slot shaped outlet opening and one expansion control slot in front of it.

The thermoplastic mass was extruded into ambiant air and the expanded strip thus obtained was immediately sheeted (while still in a thermoplastic state) between rolls the surface of which had a relief in form of parallel lines spaced about 2 mm from each other.

The sheet thus obtained was cut into blanks having a triangular shape.

The triangular flat blanks thus obtained (still in a thermoplastic state) were coiled or rolled into cones.

The cones were then dried to a residual water content of about 2-3%.

The finished cones each had a weight of about 10 g and a height of about 10 cm.

The cones had an attractive aspect and a porous, crispy texture which stay crisp. This texture could be said even to be cracking and recalling a biscuit texture.

## Claims

1. A cereal cone having a porous texture and comprising, in % by weight, from 60 to 85% of cereal flour, from 2 to 10% of starch, from 8 to 20% of sugar, from 5 to 12% of milk powder, from 2 to 10% of oil or fat and from 1 to 5% of residual water.

2. A cereal cone according to claim 1, further comprising up to 2% of honey and up to 2% of glycose syrup

3. A cereal cone according to claim 1, comprising from 1.0 to 3.0% of residual water.

4. A process for manufacturing a cereal cone, consisting of producing at least one strip of expanded cereal by extrusion-cooking, sheeting the strip between rolls, cutting the sheet into blanks and forming the blanks into a cone shape.

5. A process according to claim 4, in which the step of producing at least one strip of expanded cereal by extrusion-cooking comprises firstly preparing a mixture comprising, in parts by weight, from 60 to 85 parts of cereal flour, from 2 to 10 parts of starch, from 8 to 20 parts of sugar, from 5 to 12 parts of milk powder, from 2 to 10 parts of oil or fat, and added water up to a water content of from 11 to 19%, cooking the mixture at 110 to 180°C under 10 to 14 MPa for 5 to 50 s in an extruder, and extruding the cooked thermo plastic mass thus obtained by having it pushed by an extruder screw or twin screw through at least one slot shaped extrusion opening of an extruder's die.

6. A process according to claim 4, in which the sheet is cut into blanks having the shape of triangles or trapezium.

7. A process according to claim 4, in which the blanks are formed into cones either by coiling or by pressing in a mould, while the blanks are still in a thermo plastic state.

8. A process according to claim 4, further comprising drying the cones down to a residual water content of from 1.0 to 3.0%.

9. A method of making the composition, the texture and the physical aspect of a cereal cone especially attractive by producing at least one strip of expanded cereal by extrusion-cooking, sheeting the strip between rolls, cutting the sheet into blanks and forming the blanks into a cone shape.
